**Europäisches Patentamt**

**European Patent Office**

**Office européen des brevets**

(19)

(11) Numéro de publication: **0 168 077**
**B1**

(12) **FASCICULE DE BREVET EUROPEEN**

(45) Date de publication du fascicule du brevet:
24.05.89

(51) Int. Cl.⁴: **G 06 F 13/42**

(21) Numéro de dépôt: **85200879.6**

(22) Date de dépôt: **05.06.85**

(54) Circuit d'interface du type esclave fonctionnant avec un bus série.

(30) Priorité. 08.06.84 FR 8409064

(43) Date de publication de la demande:
15.01.86 Bulletin 86/3

(45) Mention de la délivrance du brevet:
24.05.89 Bulletin 89/21

(84) Etats contractants désignés:
DE FR GB IT

(56) Documents cités:
ELECTRONIC COMPONENTS AND APPLICATIONS, vol. 3, no. 1, novembre 1980, pages 38-46, Eindhoven, NL; A.P.M. MOELANDS: "Serial I/O with the MAB8400 series microcomputers
ELONCO BULLETIN, vol. 114, juin 1983, pages 2-6, Eindhoven, NL; "Samenwerking Philips en Intel. Twee nieuwe "bussen", CMOS-technologie en "CLIPS"
MINI-MICRO CONFERENCE RECORD, mai 1984, pages 23/5.1 - 23/5.10, Northeast, New York, US; R.L. MITCHELL: "Super serial systems"

(73) Titulaire: **RTC-COMPELEC, 130, Avenue Ledru-Rollin, F-75011 Paris (FR)**
(84) Etats contractants désignés: **FR**

(73) Titulaire: **N.V. Philips' Gloeilampenfabrieken, Groenewoudseweg 1, NL-5621 BA Eindhoven (NL)**
(84) Etats contractants désignés: **DE GB IT**

(72) Inventeur: **Barbu, Stefan, SOCIETE CIVILE S.P.I.D. 209, rue de l'Université, F-75007 Paris (FR)**
Inventeur: **Valkestijn, Leo, SOCIETE CIVILE S.P.I.D. 209, rue de l'Université, F-75007 Paris (FR)**
Inventeur: **Van de Kerkhof, F.A.M., SOCIETE CIVILE S.P.I.D. 209, rue de l'Université, F-75007 Paris (FR)**

(74) Mandataire: **Jacquard, Philippe et al, SOCIETE CIVILE S.P.I.D. 209, rue de l'Université, F-75007 Paris (FR)**

## Description

L'invention concerne un circuit d'interface du type esclave destiné à la commutation d'une pluralité de voies et comprenant des entrées logiques susceptibles de recevoir des signaux de données et d'horloge fournies par un bus série, un registre pour recevoir les signaux reçus du bus par les entrées logiques et une mémoire des données reçues par le registre.

Un tel circuit est connu du brevet européen 51332 au nom de N.V. Philips 'GLOEILAMPENFA-BRIEKEN' publié le 11 avril 1984, sous la forme d'une station adressable notamment soit comme maître soit comme esclave, et qui est mise en œuvre dans un système bus à deux fils, du type série.

Dans un certain nombre d'applications et notamment en télévision, on met couramment en œuvre un ou plusieurs circuits d'interface entre le récepteur et une prise de péritélévision. Les circuits généralement connus pour cette application réalisent des commutations de manière classique et ne peuvent être commandés à partir d'un bus.

L'invention se propose de réaliser un circuit d'interface qui puisse être commandé à partir d'un bus série, notamment du type précité, mais qui soit conçu de manière à ne présenter que les fonctions d'une interface du type esclave dans une configuration où l'écriture dans la mémoire a lieu après reconnaissance d'une adresse.

Dans ce but, l'invention est caractérisée en ce qu'elle comporte un décodeur commandant la commutation des voies à partir de signaux logiques stockés dans la mémoire, ainsi qu'une pluralité d'entrées d'adressage susceptibles d'être mises chacune à un niveau logique, de manière à générer une adresse affichée, en ce que le registre est un registre à décalage recevant en série à une entrée située à une extrémité amont des informations logiques série fournies par le bus sous forme de cycles présentant chacun au moins une séquence et cadencé par un signal d'horloge fourni par le bus auquel le circuit est normalement raccordé, et produisant à une sortie située à une extrémité aval un signal d'acceptation de fin de séquence introduit à 'entrée d'une première bascule de contrôle cadencée par ledit signal d'horloge et dont la sortie cadence une seconde bascule de contrôle dite pointeur dont la sortie inversée est bouclée sur son entrée, en ce que la présence d'un niveau logique 1 à la sortie de la première bascule et à la sortie inverse du pointeur autorise l'initialisation du registre, par exemple par mise à l'état 1 de sa première bascule et remise à zéro de ses autres bascules, en ce qu'il comporte un comparateur logique identifiant, dans une partie donnée d'une séquence d'adresse des informations logiques série fournies par le bus si ladite séquence d'adresse correspond à ladite adresse affichée, et produisant un signal logique d'identification, en ce qu'il comporte un circuit pour mémoriser ledit signal d'identification, et en ce qu'il comporte une porte

autorisant le chargement dans la mémoire des données du registre lorsque la sortie de la première bascule de contrôle et du pointeur sont à l'état logique 1, lorsqu'est présent un dit signal d'identification mémorisé ainsi qu'un dit signal d'acceptation de fin de séquence, lequel correspond de ce fait à la fin d'une séquence de données qui suit ladite séquence d'adresse.

Selon un mode de réalisation, on initialise le registre entre la séquence d'adresse et la séquence de données, en produisant une mise à.l'état 1 de la première bascule du registre et une remise à zéro de ses autres bascules lorsque la sortie de la première bascule de contrôle est à l'état 1 et la sortie du pointeur à l'état zéro.

Le circuit selon l'invention peut être rendu inactif grâce à une série de portes logiques inhibant le passage des signaux logiques disponibles en sortie du premier décodeur vers les voies à commuter en présence d'un signal logique dit d'arrêt du circuit d'interface.

Une validation de ce signal d'arrêt peut être obtenue à l'aide d'une porte d'autorisation recevant à une entrée ledit signal d'arrêt et à l'autre une sortie d'une première bascule de la mémoire chargée lors dudit chargement par la première bascule du registre.

Le circuit peut être initialisé grâce à un générateur d'impulsion produisant, lors de la mise sous tension du circuit, une impulsion produisant l'initialisation de la mémoire et du registre.

Selon une variante avantageuse, le bus fournit, conformément à la procédure décrite dans le brevet européen précité, une information de départ et d'arrêt d'un cycle d'informations fournies par le bus à l'aide de relations logiques entre les signaux d'information et d'horloge.

Le circuit comporte alors une troisième et une quatrième bascule de contrôle qui, lorsque le circuit d'interface est dans son premier état, reçoivent à leur entrée le signal d'horloge et sont cadencées l'une par le signal d'informations et l'autre par son inverse de telle sorte que la sortie de la troisième bascule soit mise à l'état 1 par un premier type de coïncidence entre les signaux d'horloge et d'informations correspondant au départ d'un dit cycle, et la quatrième bascule soit mise à l'état 1 par un second type de coïncidence entre les signaux d'horloge et d'informations correspondant à la fin d'un cycle, la troisième bascule étant remise à zéro par l'inverse du signal d'horloge et la quatrième bascule par la sortie de la troisième, la sortie de la quatrième bascule étant agencée de manière à produire, lorsqu'elle se trouve à l'état logique 1, une initialisation du registre par mise à l'état 1 de sa première bascule et remise à zéro de ses autres bascules.

On peut avantageusement mettre à l'état logique 1 la quatrième bascule lorsque, après une séquence d'adresse, aucune identification n'a été mémorisée. Pour ce faire, le circuit est agencé pour que la quatrième bascule ait sa sortie mise à l'état logique 1 lorsque le signal d'identification mémorisé est à l'état logique 0 et lorsque la première bascule a sa sortie à l'état logique 1,

ceci produisant en conséquence une initialisation du registre.

La quatrième bascule peut également avoir sa sortie mise à l'état logique 1 dans diverses configurations, notamment en présence d'une impulsion produite par le générateur d'impulsion ou bien lorsque la sortie des première et deuxième bascule et le signal d'horloge sont ensemble au niveau logique 1 (détection de fin de cycle).

Le registre peut être avantageusement initialisé lorsque la quatrième bascule, et éventuellement la troisième bascule, a sa sortie à l'état 1. Cette initialisation se produit alors lorsque la quatrième bascule détecte un état inactif du circuit, ou bien lorsque la troisième bascule indique, en cours de cycle, la réception intempestive d'une coïncidence correspondant au début d'un cycle.

Dans le but de dialoguer avec le bus en vue de l'acceptation d'une séquence de données qui suit une séquence d'adresse, le circuit comporte avantageusement une bascule d'acceptation cadencée par le signal d'horloge et recevant à son entrée le produit logique du signal d'acceptation et du signal d'identification mémorisé, et produisant à la sortie en direction du bus un signal d'autorisation. Cette bascule d'acceptation peut également être remise à zéro par ladite impulsion. Ladite impulsion peut également remettre à zéro la première bascule de contrôle et mettre à l'état 1 la quatrième bascule de contrôle.

Selon un mode de réalisation, le circuit pour mémoriser le signal d'identification comporte deux portes ET inverseuses dont la sortie de l'une est bouclée sur une des entrées de l'autre et vice versa, l'autre entrée de la première des deux portes ET inverseuses recevant l'inverse du signal d'identification, mais seulement si le pointeur a sa sortie à l'état logique 0 et si le signal d'horloge est à l'état logique 1, l'autre entrée de la seconde des deux portes ET inverseuses recevant le produit logique des inverses des sorties de la troisième et de la quatrième bascule de manière à permettre le maintien lors de chaque cycle de la mémorisation du signal d'identification.

L'invention sera mieux comprise à la lecture de la description qui va suivre donnée à titre d'exemple non limitatif, en liaison avec les figures que représentent:

- la figure 1, un diagramme général d'un dispositif selon l'invention;
- la figure 2, un mode de réalisation de la mémoire de la figure 1 et sa liaison fonctionnelle avec des interrupteurs commandés;
- la figure 3, un mode de réalisation de la logique bus, du registre et du circuit d'identification d'adresse de la figure 1;
- et les figures 4a et 4b, respectivement un cycle fourni par le bus et un diagramme temporel des principaux signaux de la figure 3.

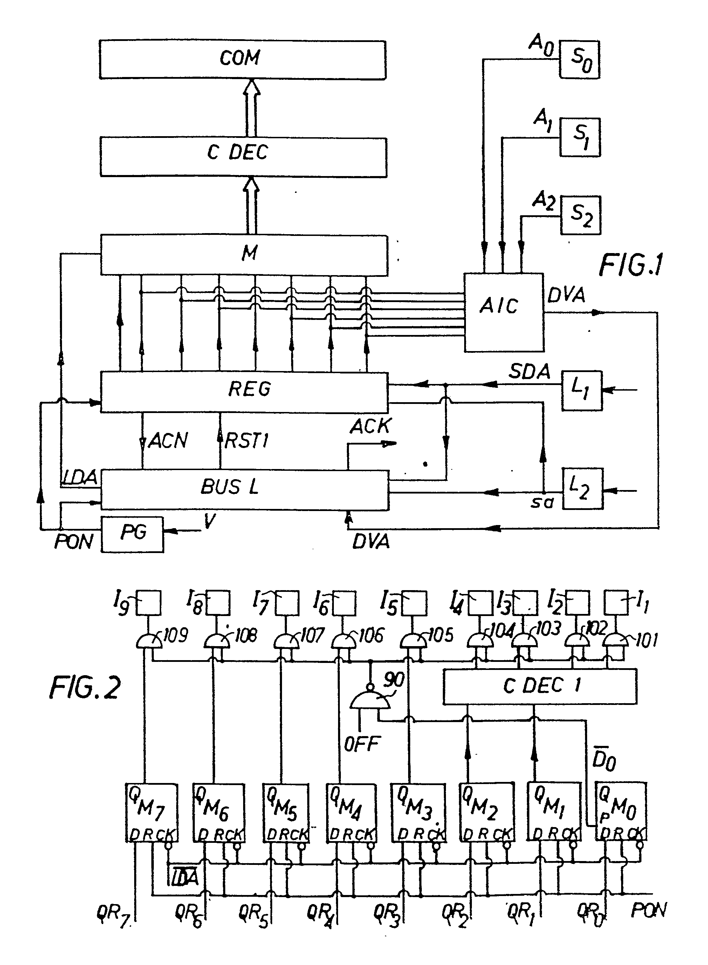

Selon la figure 1, le circuit d'interface comporte des entrées d'adressage $S_0$, $S_1$, $S_2$ susceptible chacune d'être reliée par câblage soit à un potentiel donné, par exemple la tension d'alimentation du circuit soit à la masse de manière à générer une adresse dite affichée $A_0$, $A_1$ et $A_2$ dont chaque bit est codé soit 0 soit 1. Une telle adresse peut être également générée à partir d'une logique multi-états et d'un décodage.

Un circuit d'identification de séquence d'adresse AIC reçoit des signaux sortants du registre REG ainsi que les signaux $A_0$, $A_1$, $A_2$ correspondant à l'adresse affichée. Il effectue une comparaison logique entre tous ces signaux d'une part pour identifier si l'adresse affichée $A_0$, $A_1$, $A_2$ correspond à l'adresse envoyée par le bus et d'autre part pour reconnaître un drapeau toujours identique envoyé dans la séquence d'adresse d'un cycle, ceci ayant pour but de détecter des erreurs éventuelles de transmission des signaux. Le circuit d'identification de séquence d'adresse AIC produit à sa sortie un signal logique d'identification DVA, qui est reçu par la logique bus BUSL.

La logique bus BUSL reçoit également le signal d'informations logiques SDA et le signal d'horloge SCL, notamment pour reconnaître le début et la fin de chaque cycle. Il reçoit en outre un signal d'acceptation de fin de séquence ACN qui est produit par le registre REG lorsque l'ensemble des bits d'une séquence ont été reçus par le registre REG. Un cycle d'informations envoyés par le bus se compose typiquement d'une séquence d'adresse qui précède une séquence de données.

La logique bus BUSL gère alors le circuit à partir de trois signaux logiques:

a) un signal de remise à zéro RST1 du registre REG qui est produit au début de chaque séquence, ainsi qu'au cas où l'adresse n'est pas reconnue ou en cas de défaut.
b) un signal d'autorisation ACK émis en direction du bus (entrée $L_1$), confirmant l'acceptation par la logique bus BUSL d'une séquence et autorisant l'envoi par le bus de la séquence suivante.
c) un signal LDA ordonnant le chargement des données du registre REG dans la mémoire M. La mémoire M commande une série de commutateurs COM par l'intermédiaire d'un décodeur de commutation COM.

Lors de la mise sous tension du circuit d'interface, la tension d'alimentation V est avantageusement appliquée à un générateur d'impulsion PG, lequel produit une impulsion PON d'initialisation de la logique bus BUSL et du registre REG, ainsi que de la mémoire M. Dans la suite de la description, toutes les bascules de type D ont été choisies du type se chargeant sur un front descendant appliqué sur leur entrée de cadencement CK. Il va de soi que des bascules se chargeant sur un front ascendant pourraient également être mises en œuvre.

Selon la figure 2, la mémoire M comporte huit bascules $M_0$ à $M_7$ de type D et le décodeur de commutation CDEC se décompose en un décodeur CDEC 1 traitant les informations des mémoires $M_1$ et $M_2$, et en une commande directe des autres mémoires $M_3$ à $M_7$. Le bloc de commuta-

tion COM consiste en neuf interrupteurs commandés $I_1$ à $I_9$.

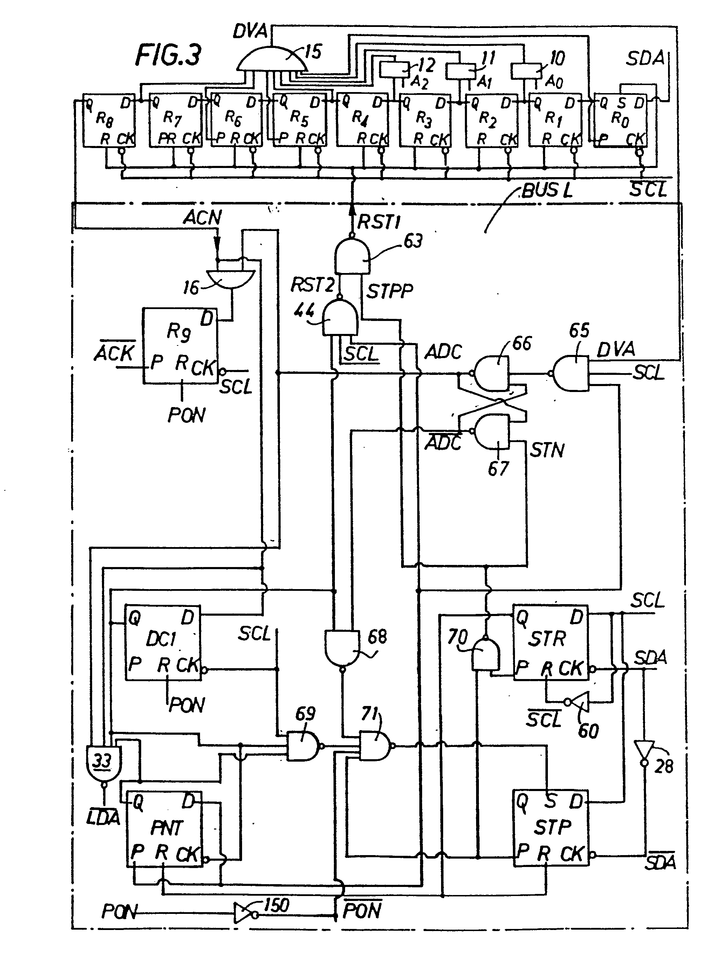

Plus spécifiquement, chacune des bascules $M_0$ à $M_7$ reçoit à son entrée D une sortie respectivement $QR_0$ à $QR_7$ du registre REG, celui-ci étant constitué par exemple comme on le verra à la figure 3 par un registre à décalage comportant des bascules $R_0$ à $R_7$ recevant les informations logiques SDA en série. Chacune des bascules $M_0$ à $M_7$ reçoit à son entrée de cadencement CK l'inverse $\overline{LDA}$ du signal de chargement des données en mémoire. Quand $\overline{LDA}$ passe à l'état 1 autorisant le chargement, $\overline{LDA}$ passe à zéro, produisant un front descendant rendant actives les entrées CK des bascules $M_0$ à $M_7$. En outre, les bascules $M_0$ à $M_7$ reçoivent sur leur entrée de remise à zéro R l'impulsion PON produite lors de la mise sous tension.

Les neuf interrupteurs commandés $I_1$ à $I_9$ reçoivent la sortie de neuf portes ET 101 à 109 dont une entrée reçoit la sortie d'une porte ET inverseuse 90. L'autre entrée des portes ET 101 à 104 reçoit une sortie du décodeur CDEC 1, et celle des portes ET 105 à 109, la sortie respectivement $M_3$ (Q) à $M_7$(Q) des bascules de mémoire $M_3$ à $M_7$.

Lorsque la sortie de la porte ET inverseuse 90 est à l'état 1 (cas normal OFF = 0) les portes 101 à 109 valident la commande des interrupteurs $I_1$ à $I_9$ par les données en mémoire dans $M_1$ à $M_7$, les signaux logiques $QM_1$ et $QM_2$ en sortie des bascules de mémoire $M_1$ et $M_2$ appliqués aux entrées du décodeur CDEC1 commandant les interrupteurs $I_1$ à $I_4$, selon quatre configurations possibles, par exemple la fermeture de l'un d'entre eux à la fois.

Comme on l'expliquera dans la suite de la description, on réserve la bascule $M_0$ à la mémorisation d'un état de validation d'une commande d'arrêt OFF. La sortie inversée $M_0$(P) de la mémoire $M_0$ est appliquée à une entrée de la porte ET inverseuse 90 dont l'autre entrée reçoit ladite commande OFF. La sortie inversée $PM_0$ de la bascule de mémoire $M_0$ valide, lorsqu'elle est au niveau 1 le passage de la commande d'arrêt OFF à travers la porte 90. La sortie des portes 101 à 109 est alors à 0 et désactive les interrupteurs $I_1$ à $I_9$.

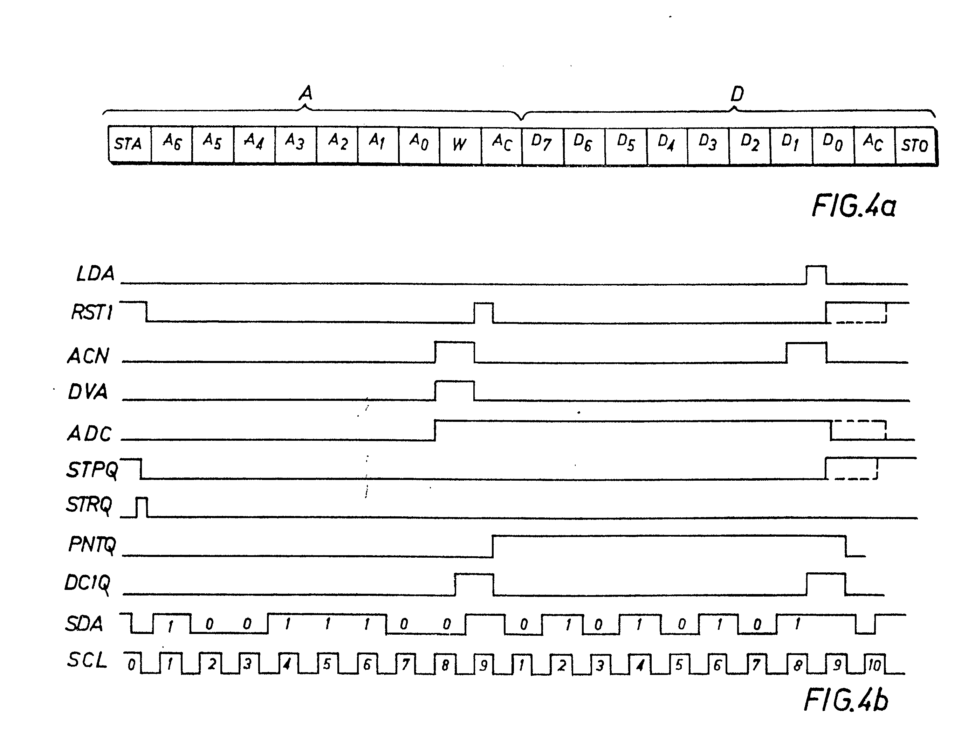

Selon la figure 3, le registre REG est un registre à décalage constitué de 9 bascules de type D $R_0...R_8$. La sortie Q des registres $R_0$ à $R_7$ est reliée à l'entrée D du registre suivant, respectivement $R_1$ à $R_8$. Chacune des bascules $R_0$ à $R_8$ est cadencée à son entrée CK par l'inverse $\overline{SCL}$ du signal d'horloge $\overline{SCL}$ de manière à fonctionner sur les fronts montants du signal d'horloge $\overline{SCL}$. La bascule $R_0$ est mise à l'état 1 (entrée 5) et les bascules $R_1$ à $R_8$ sont remises à zéro par un signal d'initialisation RST1 disponible à la sortie d'une porte ET inverseuse 63. Avant chaque cycle, le signal RST1 effectue une initialisation. D'où il résulte $R_0$ (Q) = 1. Ceci correspond temporellement au bit de départ STA du cycle type représenté à la figure 4a. Le registre à décalage, cadencé par SCL reçoit tous les bits de la séquence d'adresse A. Le positionnement correct de cette séquence dans le registre à décalage intervient lorsque le 1

logique introduit dans $R_0$ lors de l'initialisation passe dans $R_8$. Alors, le bit $A_6$ est stocké dans $R_7$ et ainsi de suite jusqu'à $A_0$ qui est stocké dans $R_1$. Le bit W est toujours égal à zéro. Les bits $A_2$, $A_1$ et $A_0$ de la séquence vont être comparés terme à terme aux bits de même nom de l'adresse affichée grâce à trois portes NON OU exclusives 10, 11 et 12. La porte 10 reçoit à ses entrées $A_0$ et $Q(R_1)$, la porte 11, $A_1$ et $Q(R_2)$ et la porte 12, $A_2$ et $Q(R_3)$. Si l'adresse $A_0$, $A_1$, $A_2$ envoyée dans la séquence A d'adresse est identique à l'adresse affichée, chacune des portes 10, 11 et 12 produit en sortie un 1 logique. Sur l'exemple de réalisation de la figure 3, on a également supposé que les bits $A_6$, $A_5$, $A_4$, $A_3$ constituaient un drapeau d'identification toujours identique selon la séquence 1001. Par conséquent, l'identification complète d'une séquence d'adresse est réalisée par une porte ET multiple 15 produisant à sa sortie un signal d'identification DVA et recevant à ses entrées les sorties $Q(R_7)$ et $Q(R_4)$ et les sorties inversées $P(R_6)$ et $P(R_5)$ ainsi que les sorties des portes 10, 11 et 12. Les portes 10, 11, 12 et 15 constituent le circuit d'identification de séquence d'adresse AIC. D'autre part, la sortie $Q(R_8)$ produit un signal logique d'acceptation de fin de séquence ACN. Le bit W qui suit $A_0$ dans la séquence d'adresse est par convention un zéro; il indique un mode d'écriture. Il peut être identifié en introduisant également $P(R_0)$ à l'entrée de la porte 15.

La partie inférieure de la figure 4, encadrée par un trait mixte, constitue la logique bus BUSL.

Elle comporte une première bascule de contrôle DC1 de type D recevant à son entrée D le signal ACN disponible à la sortie Q de $R_8$, et à son entrée de cadencement CK le signal d'horloge SCL, et une deuxième bascule de contrôle PNT, dite pointeur, également de type D dont la sortie inverseuse P est bouclée sur l'entrée D, son entrée de cadencement CK étant reliée à la sortie Q de la première bascule DC1. Le pointeur PNT a pour fonction d'indiquer si on se trouve dans une séquence d'adresse ou de données d'un cycle.

Une troisième STR et une quatrième STP bascule de contrôle, également de type D ont pour fonction de gérer le départ et la fin d'un cycle. Le bus indique le départ d'un cycle (voir figure 5b) par une transition du niveau 1 au niveau 0 du signal SDA lorsque le signal d'horloge SCL est au niveau 1, et la fin d'un cycle par une transition du niveau 0 au niveau 1 du signal SDA lorsque le signal d'horloge SCL est au niveau 1. Par contre, les transitions porteuses d'information du signal SDA ont lieu lorsque le signal d'horloge SDA est au niveau logique 0. La quatrième bascule STP a pour fonction d'indiquer si le circuit est dans un état actif vis-à-vis du bus ou inactif. Dans ce dernier cas, sa sortie initialise le registre R.

La troisième bascule STR reçoit à son entrée D le signal d'horloge SCL et est cadencée à son entrée de cadencement CK par le signal SDA de manière à détecter le départ d'un cycle, alors que la quatrième bascule STP reçoit à son entrée D le signal d'horloge SCL et à son entrée de cadencement CK le signal $\overline{SDA}$ inversé à partir de SDA par un inverseur 28, de manière à détecter la fin d'un cycle. La sortie Q de la troisième bascule STR est appliquée à l'entrée R de remise à zéro du pointeur PNT et de la quatrième bascule STP. La troisième bascule STR est remise à zéro par l'inverse $\overline{SCL}$ du signal d'horloge SCL obtenu par l'inverseur 60 dont la sortie est reliée à l'entrée R de STR. Le signal d'autorisation DVA produit en sortie de la porte 15 est mémorisé par une bascule à deux portes ET inverseuses 66 et 67 bouclées l'une sur l'autre, c'est-à-dire que la sortie des portes 66 et 67 est reliée respectivement à une entrée des portes 67 et 66. Cette mémorisation est autorisée par une porte ET inverseuse 65 et a lieu lorsque DVA = 1, SCL = 1 et PNT Q (sortie du pointeur) = 0. Cette dernière condition indique que l'on est dans la partie adresse d'un cycle et évite toute identification accidentelle dans une séquence de données. La porte ET inverseuse 65 reçoit donc à ses entrées les signaux DVA et SCL et la sortie inverseuse P du pointeur PNT, et sa sortie est reliée à l'autre entrée de la porte ET inverseuse 66. D'autre part, l'autre entrée de la porte ET inverseuse 67 reçoit un signal STN disponible à la sortie d'une porte ET 70 dont les entrées sont reliées respectivement aux sorties inverseuses P des bascules de contrôle STR et STP. Tant que STN=1, le signal DVA qui est fugitif, reste mémorisé sous forme du signal ADC à la sortie de la porte 66. Le retour de STN à l'état 0 équivaut à l'effacement de cette mémorisation. L'initialisation des bascules $R_0$ à $R_8$ est réalisée par le signal RST1 disponible à la sortie d'une porte ET inverseuse 63 qui reçoit à une entrée l'inverse P de la sortie de la quatrième bascule STP (initialisation lorsque STPQ=1) ou de préférence, comme représenté, le signal de sortie STN de la porte ET 70. Dans ce dernier cas, l'initialisation a lieu quand STPQ ou STRQ est égal à 1, ce qui entraîne l'initialisation du registre REG en cas d'arrivée d'une coïncidence intempestive correspondant au départ d'un cycle alors qu'un tel cycle est en cours de déroulement. La porte ET inverseuse 63 reçoit à son autre entrée un signal RST2 disponible à la sortie d'une porte ET inverseuse 44. Celle-ci reçoit à ses trois entrées, le signal d'horloge SCL, la sortie de la première bascule de contrôle CD1, et la sortie inversée P du pointeur PNT.

Les bascules $R_0$ à $R_8$ sont initialisées lorsque la bascule STP mémorise un état inactif du circuit (STPQ = 1), ou bien entre une séquence d'adresses et une séquence de données (RST2), ainsi qu'en début de cycle.

Une bascule $R_9$ de type D génère à sa sortie P un signal logique d'autorisation inversé $\overline{ACK}$, c'est-à-dire que l'acceptation correspond à un 0 logique. La bascule $R_9$ est cadencée à son entrée d'autorisation de chargement CK par le signal d'horloge SCL et reçoit à son entrée D la sortie d'une porte ET 16 dont une entrée reçoit le signal d'acceptation de fin de séquence ACN, et l'autre le signal d'identification mémorisé ADC.

Le chargement des bascules de mémoire $M_0$ à $M_7$ est obtenu par un signal de chargement inversé $\overline{LDA}$ appliqué à leurs entrées d'autorisation de chargement CK. Ledit chargement est obtenu par passage de $\overline{LDA}$ de l'état 1 à l'état 0. Le signal $\overline{LDA}$ est obtenu à la sortie d'une porte ET inverseuse 33 dont les entrées reçoivent le signal d'acceptation de fin de séquence ACN, le signal d'identification mémorisé ADC, et les sorties Q de la première bascule DC1 et du pointeur PNT. Le chargement est donc autorisé lorsqu'une fin de séquence de données a été détectée, alors que préalablement, une séquence d'adresse correspondant à celle affichée par le circuit a été identifiée.

La quatrième bascule STP est mise à l'état 1 par la sortie d'une porte ET inverseuse 71 à quatre entrées. Sa première entrée reçoit la sortie inversée P de STP (auto-entretien de l'état 1 de STP) et sa seconde entrée l'inverse $\overline{PON}$ de l'impulsion PON produite lors de la mise sous tension (mise à l'état 1 de STP à la mise sous tension).

Sa troisième entrée reçoit la sortie d'une porte ET inverseuse 69 dont les entrées sont SCL, la sortie Q de DC1, et la sortie Q du pointeur PNT (mise à l'état 1 de STP en fin de cycle, même en cas de défaillance du bus). Sa quatrième entrée reçoit la sortie d'une porte ET inverseuse 68 dont les entrées sont la sortie Q de DC1 et l'inverse $\overline{ADC}$ de ADC, disponible à la sortie de la porte ET inverseuse 67 (mise à l'état 1 de STP si à la fin d'une séquence d'adresse, aucun signal d'identification n'a été produit et mémorisé).

On remarquera enfin que l'impulsion PON produite lors de la mise sous tension du circuit, remet également à zéro (entrée R) la première bascule de contrôle DC1 et la bascule $R_9$.

En liaison avec les figures 4a et 4b, on va maintenant décrire le fonctionnement du circuit lors d'un cycle d'informations fourni par le bus, et correspondant à l'adresse affichée $A_0$, $A_1$, $A_2$ aux entrées $S_0$, $S_1$ et $S_2$ du circuit.

La condition de départ STA correspond à un front descendant de SDA avec SCL = 1. Ceci est détecté par STR dont la sortie STRQ passe à l'état 1 sur ledit front descendant de SDA, ce passage à l'état 1 ayant également pour effet de remettre à zéro la sortie STPQ de STP et de PNT et de faire ADC = 0 car STN = 0 et DVA = 0. A ce moment, la sortie P de STP passe à l'état 1 (STPQ = 0) et RST1 à l'état 0 également. Grâce à l'initialisation au préalable, la bascule $R_0$ est à ce moment à l'état 1, et les bascules $R_1$ à $R_8$ à l'état 0. La sortie Q de STR est remise à zéro par le front descendant du coup d'horloge SCL de départ. Le bus envoie la séquence A d'adresses, jusqu'à ce que $R_8$ reçoive par décalage le 1 logique inscrit dans $R_0$ lors de l'initialisation, ce qui entraîne ACN = 1 sur le front montant du 8ième coup d'horloge. Le bit $A_6$ est alors positionné dans $R_7$ et ainsi de suite jusqu'à $A_0$ positionné dans $R_1$, et W = 0 (par convention) dans $R_0$. L'adresse envoyée par le bus correspondant avec celle affichée par le circuit, la porte ET 15 envoie un DVA = 1, lequel est autorisé par la porte 65, car la sortie P du pointeur PNT est à l'état 1, à partir du huitième coup d'horloge SCL. ADC passe à l'état 1. Au coup d'horloge suivant, DVA passe de nouveau à 0, mais ADC reste au niveau 1 car les sorties P de STR et STP sont toutes deux au niveau 1, donc STN = 1.

La présence simultanée de ACN et ADC, détectée par la porte 16 produit à la sortie P de $R_9$ le signal $\overline{ACK}$ sur le front descendant au 8ième coup d'horloge, celui-ci se trouvant effacé par le front descendant du 9ième coup d'horloge, car à ce moment la sortie de la porte 16 est à zéro: ACK est donc un signal identique à ACN, mais retardé d'un demi-coup d'horloge. Il est donc présent lorsque l'horloge est à son niveau haut du 9ième coup donc dans l'espace prévu à cet effet entre la séquence A d'adresse et la séquence D de données. La manière dont le système bus traite ce signal ACK est décrite dans le brevet européen précité.

Le signal ACN met également à l'état 1 la bascule DC1 (CD1Q) sur le front descendant du huitième coup d'horloge. DC1Q repasse à 0 sur le front descendant du neuvième coup d'horloge, car ACN est repassé à 0 sur le front montant de ce même coup d'horloge. Ce front descendant de CD1Q fait passer la sortie du pointeur PNT à l'état 1 (PNTQ=1). Le pointeur PNT mémorise ainsi que l'on va maintenant recevoir la séquence de données D du cycle.

Pendant la durée du neuvième coup d'horloge SCL, on a SCL=1, DC1Q=1 et PNTQ=0, d'où RST1=1; ce qui entraîne l'initialisation du registre R, $R_0$ étant à l'état 1, et $R_1$ à $R_8$ à l'état 0.

L'arrivée de la séquence de données intervient donc avec ADC=1 et PNT=1.

Comme la séquence A d'adresse, le 1 logique inscrit dans $R_0$, lors de l'initialisation est transféré par décalage jusqu'au registre $R_8$ de manière à produire un ACN=1 sur le front montant du 8ième coup d'horloge de la séquence D, ACN revenant à 0 sur le front montant du coup d'horloge suivant. Le bit $D_7$ est alors stocké en $R_7$ et ainsi de suite jusqu'au $D_0$ qui se trouve stocké dans $R_0$. On a alors DC1Q=1 sur le front descendant du huitième coup d'horloge de la séquence D, DC1Q revenant à 0 sur le front descendant du coup d'horloge suivant.

Entre le front descendant du huitième coup d'horloge de la séquence D et le front ascendant suivant, on a simultanément DC1Q = PNTQ = ACN=ADC=1, d'où LDA=1 pendant la durée d'un demi-coup d'horloge. Le contenu de $R_0$ à $R_7$ est transféré en parallèle dans les bascules de mémoire $M_0$ à $M_7$. En particulier, $M_0$ reçoit de $R_0$ le bit $D_0$, en principe un 0 permettant de valider la commande OFF à l'entrée de la porte 90 (figure 3).

La position ouverte ou fermée des interrupteurs $I_1$ à $I_9$ est alors modifiée conformément au nouveau contenu des mémoires $M_0$ à $M_7$, si la commande OFF est inactive ou inhibée par le bit $D_0$.

Comme pour la séquence d'adresse A, $R_9$ produit un signal ACK=1 entre le front descendant du huitième et celui du neuvième coup d'horloge de la séquence D. Le passage à zéro de DC1Q sur le front descendant du neuvième coup d'horloge de la séquence D entraîne la remise à zéro du pointeur (PNPQ=0). En fin de cycle, le bus envoie un signal d'arrêt constitué par un front SDA montant sur un signal d'horloge SCK au niveau 1, ce qui entraîne STPQ=1, d'où STN=0, donc ADC=0, et RST1=1 (initialisation du registre R). Un mode perfectionné du circuit d'interface selon l'invention prévoit le cas où le bus serait défaillant quant à la production d'un tel signal d'arrêt.

Dans ce but, on met à profit le fait que, dans la phase terminale d'un cycle, on a transitoirement et de manière caractéristique DC1Q = PNTQ = 1. La porte 69 met alors à l'état 1 (STPQ = 1) la bascule STP sur le front ascendant du neuvième coup d'horloge de la séquence D.

Le signal d'arrêt fourni par le bus consiste en un front montant sur le signal SDA, pendant que SCL = 1 sur le dixième coup d'horloge de la séquence D. Il est détecté par la bascule STP qui se met à l'état 1 (STPQ = 1), dans les variantes du circuit ne présentant pas de porte 69. Ceci est représenté en pointillé à la figure 4b, également en ce qui concerne les signaux ADC et RST1.

## Revendications

1. Circuit d'interface du type esclave destiné à fonctionner avec un bus série en vue de la commutation d'une pluralité de voies et comprenant des entrées logiques susceptibles de recevoir des signaux d'informations et d'horloge fournies par ledit bus, un registre (REG) pour recevoir les signaux (SDA, SCL) reçus du bus par les entrées logiques ($L_1$, $L_2$) et une mémoire (M) des données reçues par le registre (REG) caractérisé en ce qu'il comporte un décodeur (CDEC) commandant la commutation des voies à partir de signaux logiques stockés dans la mémoire (M), ainsi qu'une pluralité d'entrées d'adressage ($S_0$, $S_1$, $S_2$) susceptibles d'être mises chacune à un niveau logique, de manière à générer une adresse affichée ($A_0$, $A_1$, $A_2$) en ce que ledit registre est un registre à décalage ($R_0...R_7$) recevant en série à une entrée située à une extrémité amount des informations logiques série (SDA) fournies par le bus sous forme de cycles présentant chacun au moins une séquence et cadencées par un signal d'horloge (SCL), et produisant à une sortie ($QR_8$) située à une extrémité aval un signal d'acceptation de fin de séquence (ACN) introduit à l'entrée (D) d'une première bascule de contrôle ($DC_1$) cadencée (CK) par ledit signal d'horloge (SCL) et dont la sortie (Q) cadence (CK) une seconde bascule de contrôle dite pointeur (PNT) dont la sortie inversée (P) est bouclée sur son entrée (D), en ce que la présence d'un niveau logique 1 à la sortie (Q) de la première bascule (DC1) et à la sortie (P) du pointeur (PNT) autorise une initialisation du registre (REG) laquelle correspond à un retour à un même état initial, en ce qu'il comporte un comparateur logique (10, 11, 12) identifiant, dans une partie donnée d'une séquence d'adresse des informations logiques série fournies par le bus si au moins ladite séquence d'adresse correspond à ladite adresse affichée, et produisant un signal logique d'identification (DVA), en ce qu'il comporte un circuit (66, 67) pour mémoriser ledit signal d'identification (DVA), et en ce qu'il comporte une porte ET (33) autorisant le chargement dans la mémoire (M), les données du registre (R) lorsque la sortie (Q) de la première bascule de contrôle (DC$_1$) et du pointeur (PNT) sont à l'état logique 1, lorsqu'est présent un dit signal d'identification mémorisé (ADC) ainsi qu'un dit signal d'acceptation de fin de séquence (ACN), lequel correspond de ce fait à la fin d'une séquence de données qui suit ladite séquence d'adresse.

2. Circuit d'interface selon la revendication 1 caractérisé en ce qu'il est agencé de manière à initialiser le registre (REG) par mise à l'état 1 d'une première bascule (R$_0$) et remise à zéro de ses autres bascules (R$_1$...R$_8$) lorsque la sortie de la première bascule de contrôle (DC$_1$) est à l'état 1 et la sortie (Q) du pointeur (PNT) à l'état zéro.

3. Circuit d'interface selon une des revendication 1 ou 2 caractérisé en ce qu'il comporte une série de portes logiques (101, 109) inhibant le passage des signaux logiques disponibles en sortie du premier décodeur (CDEC) vers les voies à commuter en présence d'un signal logique dit d'arrêt (OFF) du circuit d'interface.

4. Circuit d'interface selon la revendication 3, caractérisé en ce qu'il comporte une porte d'autorisation (90) recevant à une entrée le signal d'arrêt (OFF) et à l'autre une sortie (P) d'une première bascule (M$_0$) de la mémoire (M) chargée lors dudit chargement par la première bascule (R$_0$) du registre (R), de manière à valider ou non le signal d'arrêt (OFF).

5. Circuit d'interface selon une des revendications précédentes caractérisé en ce qu'il comporte un générateur d'impulsion (PG) produisant, lors de la mise sous tension du circuit, une impulsion (PON) produisant l'initialisation de la mémoire (M) et dudit registre (REG).

6. Circuit d'interface selon une des revendications précédentes caractérisé en ce qu'il comporte une troisième (STR) et une quatrième (STP) bascule de contrôle qui, lorsque le circuit d'interface est dans son premier état, reçoivent à leur entrée (D) le signal d'horloge (SCL) et sont cadencées (CK) l'une par le signal d'informations (SDA) et l'autre par son inverse ($\overline{SDA}$) de telle sorte que la sortie (Q) de la troisième bascule (STR) soit mise à l'état 1 par un premier type de coïncidence entre les signaux d'horloge (SCL) et d'informations (SDA) correspondant au départ d'un dit cycle, et la quatrième bascule (STP) soit mise à l'état 1 par un second type de coïncidence entre les signaux d'horloge (SCL) et d'informations (SDA) correspondant à la fin d'un cycle, la troisième bascule (STR) étant remise à zéro par l'inverse ($\overline{SCL}$) du signal d'horloge (SCL) et la quatrième bascule (STP) par la sortie (Q) de la troisième (STR), la sortie (Q) de la quatrième bascule (STP) étant agencée de manière à produire, lorsqu'elle se trouve à l'état logique 1, une mise à l'état 1 de la première bascule (R$_0$) du registre (R) et la remise à zéro de ses autres bascules (R$_1$...R$_8$).

7. Circuit d'interface selon la revendication 6, caractérisé en ce qu'il est agencé de manière que la quatrième bascule (STP) a sa sortie mise à l'état logique 1 lorsque le signal d'identification mémorisé (ADC) est à l'état logique 0 et lorsque la première bascule (DC$_1$) a sa sortie à l'état logique 1.

8. Circuit d'interface selon une des revendications 6 ou 7, caractérisé en ce qu'il est agencé de manière à produire une initialisation du registre (REG) lorsque la quatrième bascule (STP) a sa sortie à l'état 1.

9. Circuit d'interface selon la revendication 8, caractérisé en ce qu'il est agencé de manière à produire une initialisation du registre (REG) lorsque la troisième bascule (STR) à sa sortie à l'état 1.

10. Circuit d'interface selon la revendication 5, en combinaison avec une des revendications 6 à 9 caractérisé en ce qu'il est agencé de manière que la quatrième bascule (STP) a également sa sortie (Q) mise à l'état logique 1 par ladite impulsion (PON), sa sortie étant par ailleurs auto-entretenue lorsqu'elle se trouve à l'état 1.

11. Circuit d'interface selon une des revendications 5 à 10, caractérisé en ce qu'il est agencé de manière que la quatrième bascule (STP) ait également sa sortie mise à l'état logique 1 lorsque la sortie des première (DC$_1$) et deuxième (PNT) bascule et le signal d'horloge (SCL) sont ensemble au niveau logique 1.

12. Circuit d'interface selon une des revendications précédentes, caractérisé en ce qu'il comporte une bascule d'acceptation (R$_9$) cadencée par le signal d'horloge (SCL) et recevant à son entrée le produit logique du signal d'acceptation (ACN) et du signal d'identification mémorisé (ADC), et produisant à sa sortie en direction du bus un signal d'autorisation (ACK).

13. Circuit d'interface selon les revendications 4 et 11 prises ensemble, caractérisé en ce qu'il est agencé de manière que ladite impulsion produise également la remise à zéro de la bascule d'acceptation (R$_9$).

14. Circuit d'interface selon les revendications 4 et 5 prises ensemble caractérisé en ce qu'il est agencé de manière que ladite impulsion produise également la remise à zéro de la première bascule de contrôle (DC$_1$) et la mise à l'état 1 de la quatrième bascule de contrôle (STP).

15. Circuit d'interface selon une des revendications précédentes, caractérisé en ce que le circuit. pour mémoriser le signal d'identification (DVA) comporte deux portes ET inverseuses (66, 67) dont la sortie de l'une est bouclée sur une des entrées de l'autre et vice versa, l'autre entrée de la première des deux portes ET inverseuses (66) recevant l'inverse ($\overline{DVA}$) du signal d'identification (DVA), mais seulement si le pointeur (PNT) a sa sortie à l'état logique 0 et si le signal d'horloge est à l'état logique 1, l'autre entrée de la seconde des deux portes ET inverseuse (67) recevant le produit logique des inverses (P) des sorties (Q) de la troisième (STR) et de la quatrième bascule (STP), de manière à permettre le maintien, lors de chaque cycle, de la mémorisation (ADC) du signal d'identification (DVA).

**Patentansprüche**

1. Schnittstellenschaltung vom Sklaventyp zum Betreiben mit einem seriellen Bus in bezug auf die Umschaltung einer Anzahl von Kanälen, und diese Schaltung enthält geeignete logische Eingänge für den Empfang über den Bus zugeführter Informations- und Taktsignale, ein Register (REG) für den Empfang der aus dem Bus über die logischen Eingänge $(L_1, L_2)$ empfangenen Signale (SDA, SCL) und einen Datenspeicher (M) für aus dem Register (REG) ankommende Daten, dadurch gekennzeichnet, dass die Schaltung einen Decoder (CDEC) zur Steuerung der Umschaltung der Kanäle mittels logischer Signale aus dem Speicher (M) sowie eine Anzahl von Adressiereingängen $(S_0, S_1, S_2)$ enthält, die je zum Erzeugen einer angezeigten Adresse $(A_0, A_1, A_2)$ auf einen logischen Pegel gebracht werden, dass das Register ein Schieberegister $(R_0...R_7)$ ist, das seriell aus dem Bus auf einem an einem stromaufwärts liegenden Ende serielle logische Informationen (SDA) als Zyklen empfängt, die je wenigstens eine Sequenz darstellen und durch ein Taktsignal (SCL) getaktet werden und auf einem an einem stromabwärts liegenden Ende befindlichen Ausgang ein Sequenzende-Freigabesignal (ACN) erzeugt, das an den Eingang (D)· eines ersten, vom Taktsignal (SCL) getakteten (CK) Steuerflipflops $(DC_1)$ gelangt und dessen Ausgang (Q) einen zweiten, mit Positionsanzeiger (PNT) bezeichneten Steuerflipflop taktet, dessen invertierter Ausgang (P) nach seinem Eingang (D) durchgeschleift ist, dass ein logischer Pegel 1 am Ausgang (Q) des ersten Flipflops $(DC_1)$ und am Ausgang (P) des Positionsanzeigers (PNT) eine Initialisierung des Registers (REG) freigibt, was einer Rückkehr nach einem selben Ausgangszustand gleichkommt, dass die Schaltung einen logischen Komparator (10, 11, 12) enthält, der in einem vorgegebenen Abschnitt einer Adress-Sequenz der vom Bus gelieferten seriellen logischen Informationen identifiziert, ob wenigstens die Adress-Sequenz der angezeigten Adresse entspricht und ein logisches Identifikationssignal (DVA) erzeugt, dass sie eine Schaltung (66, 67) zum Speichern des Identifikationssignals (DVA) enthält und dass sie ein UND-Gatter (33) zum Genehmigen des Ladevorgangs der Daten des Registers (R) in den Speicher (M) enthält, wobei der Ausgang (Q) des ersten Steuerflipflops $(DC_1)$ und des Positionsanzeigers (PNT) im logischen Zustand 1 stehen, wobei ein gespeichertes Identifikationssignal (ADC) sowohl als ein Sequenzende-Freigabesignal (ACN) vorliegen, das hierdurch dem Datensequenzende entspricht, das der Adress-Sequenz folgt.

2. Schnittstellenschaltung nach Anspruch 1, dadurch gekennzeichnet, dass sie die Initialisierung des Registers (R) durch Einstellung des Zustandes 1 eines ersten Flipflops $(R_0)$ und durch Nullrückstellung seiner anderen Flipflops $(R_1...R_8)$ verwirklicht, wobei der Ausgang des ersten Steuerflipflops $(DC_1)$ im Zustand 1 und der Ausgang (Q) des Positionsanzeigers (PNT) im Nullzustand stehen.

3. Schnittstellenschaltung nach Anspruch 1 oder 2, dadurch gekennzeichnet, dass darin eine Reihe logischer Gatter (101...109) vorgesehen ist, die den Durchgang der am Ausgang des ersten Decoders (CDEC) zur Verfügung stehenden logischen Signale nach den Schaltkanälen beim Erscheinen eines logischen Signals mit der Bezeichnung Schnittstellen-Schaltungsunterbrechung (OFF) verhindert.

4. Schnittstellenschaltung nach Anspruch 3, dadurch gekennzeichnet, dass darin ein Genehmigungsgatter (90) vorgesehen ist, das an einem Eingang das Blockierungssignal (OFF) und am anderen Ausgang ein Ausgangssignal (P) eines ersten Flipflops $(M_0)$ des Speichers (M) empfängt, der beim Ladevorgang durch den ersten Flipflop $(R_0)$ des Registers (R) geladen ist, wodurch möglicherweise das Blockierungssignal (OFF) freigegeben wird.

5. Schnittstellenschaltung nach einem der vorangehenden Ansprüche, dadurch gekennzeichnet, dass darin ein Impulsgeber (PG) vorgesehen ist, der bei Spannungsbelastung der Schaltung einen Impuls (PON) erzeugt, der die Initialisierung des Speichers (M) und des Registers (REG) bewirkt.

6. Schnittstellenschaltung nach einem oder mehreren der vorangehenden Ansprüche, dadurch gekennzeichnet, dass darin ein dritter (STR) und ein vierter (STP) Steuerflipflop vorgesehen sind, die im ersten Zustand der Schnittstellenschaltung an ihrem Eingang (D) das Taktsignal (SCL) empfangen und einer durch das Informationssignal (SDA) und der andere durch das invertierte Informationssignal $(\overline{SDA})$ derart getaktet (CK) werden, dass der Ausgang (Q) des dritten Flipflops (STR) durch eine erste Koinzidenzart zwischen den Taktsignalen (SCL) und Informationssignalen (SDA) entsprechend dem Start eines genannten Zyklus in den Zustand 1 gebracht wird und der vierte Flipflop (STP) durch eine zweite Koinzidenzart zwischen den Taktsignalen (SCL) und Informationssignalen (SDA) entsprechend dem Ende eines Zyklus in den Zustand 1 gebracht wird, wobei der dritte Flipflop (STR) durch das invertierte Taktsignal $(\overline{SCL})$ und der vierte Flipflop (STP) über den Ausgang (Q) des dritten (STR) auf Null zurückgestellt werden, wobei der Ausgang (Q) des vierten Flipflops (STP) derart ausgelegt ist, dass er im logischen Zustand 1 eine Einstellung des ersten Flipflops $(R_0)$ des Registers (R) in den Zustand 1 und die Nullrückstellung seiner anderen Flipflops $(R_1...R_8)$ verwirklicht.

7. Schnittstellenschaltung nach Anspruch 6, dadurch gekennzeichnet, dass die Schaltung derart ausgelegt ist, dass der vierte Flipflop (STP) mit seinem Ausgang im logischen Zustand 1 steht, wobei das gespeicherte Informationssignal (ADC) den logischen Zustand 0 hat und der erste

Flipflop (DC$_1$) mit seinem Ausgang im logischen Zustand 1 steht.

8. Schnittstellenschaltung nach Anspruch 6 oder 7, dadurch gekennzeichnet, dass die Schaltung derart ausgelegt ist, dass eine Initialisierung des Registers (REG) verwirklicht wird, während der vierte Flipflop (STP) mit seinem Ausgang im Zustand 1 steht.

9. Schnittstellenschaltung nach Anspruch 6, dadurch gekennzeichnet, dass die Schaltung derart ausgelegt ist, dass eine Initialisierung des Registers (REG) verwirklicht wird, während der dritte Flipflop (STR) mit seinem Ausgang im Zustand 1 steht.

10. Schnittstellenschaltung nach Anspruch 5 im Zusammenhang mit einem der Ansprüche 6 bis 9, dadurch gekennzeichnet, dass die Schaltung derart ausgelegt ist, dass der vierte Flipflop (STP) ebenfalls mit seinem Ausgang (Q) vom genannten Impuls (PON) in den logischen Zustand 1 gebracht wird, wobei sein Ausgang im Zustand 1 ausserdem selbsthaltend ist.

11. Schnittstellenschaltung nach einem der Ansprüche 5 bis 10, dadurch gekennzeichnet, dass die Schaltung derart ausgelegt ist, dass der vierte Flipflop (STP) ebenfalls mit seinem Ausgang in den logischen Zustand 1 gebracht wird, während der Ausgang des ersten (DC$_1$) und des zweiten (PNT) Flipflops und das Taktsignal (SCL) beide auf dem logischen Pegel 1 liegen.

12. Schnittstellenschaltung nach einem der vorangehenden Ansprüche, dadurch gekennzeichnet, dass die Schaltung einen vom Taktsignal (SCL) getakteten Freigabeflipflop (R$_9$) enthält und an ihrem Eingang das logische Produkt des Freigabesignals (ACN) und des gespeicherten Identifikationssignals (ADC) empfängt und an seinem Ausgang in Busrichtung ein Genehmigungssignal (ACK) erzeugt.

13. Schnittstellenschaltung nach den zusammengenommenen Ansprüchen 4 und 11, dadurch gekennzeichnet, dass die Schaltung derart ausgelegt ist, dass der genannte Impuls ebenfalls die Nullrückstellung des Freigabeflipflops (R$_9$) bewirkt.

14. Schnittstellenschaltung nach den zusammengenommenen Ansprüchen 4 und 5, dadurch gekennzeichnet, dass die Schaltung derart ausgelegt ist, dass der genannte Impuls ebenfalls die Nullrückstellung des ersten Steuerflipflops (DC$_1$) und die Einstellung des vierten Steuerflipflops (STP) in den Zustand 1 bewirkt.

15. Schnittstellenschaltung nach einem oder mehreren der vorangehenden Ansprüche, dadurch gekennzeichnet, dass die Schaltung zum Speichern des Identifikationssignals (DVA) zwei NICHT-UND-Gatter (66, 67) enthält, von denen der Ausgang des einen nach einem der Eingänge des anderen und umgekehrt durchgeschleift ist, wobei der andere Eingang des ersten der beiden NICHT-UND-Gatter (66) das invertierte Identifikationssignal ($\overline{\text{DVA}}$) empfängt, jedoch nur wenn der Positionsanzeiger (PNT) mit seinem Ausgang im logischen Zustand 0 und das Taktsignal im logischen Zustand 1 stehen, wobei der andere Eingang des zweiten der beiden NICHT-UND-Gatter (67) das logische Produkt der Invertierten (P) der Ausgänge (Q) des dritten (STR) und des vierten Flipflops (STP) derart empfängt, dass bei jedem Zyklus die Speicherung (ADC) des Identifikationssignals (DVA) ermöglicht wird.

Claims

1. A slave-type interface circuit intended to operate with a serial bus for the purpose of switching a plurality of channels and comprising logic inputs capable of receiving information and clock signals supplied by said bus, a register (REG) for receiving the signals (SDA, SCL) received from the bus by the logic inputs (L$_1$, L$_2$), and a memory (M) for the data received by the register (REG), characterized in that it comprises a decoder (CDEC) which controls the switching of the channels on the basis of logic signals stored in the memory (M), and also a plurality of addressing inputs (S$_0$, S$_1$, S$_2$) each of which can be set to a logic level so as to generate an indicated address (A$_0$, A$_1$, A$_2$) in that the register is a shift register (R$_0$...R$_7$) receiving in series at an input located at an upstream end series logic information (SDA) supplied by the bus in the form of cycles, each of which presents at least one sequence and is clocked by a clock signal (SCL), and producing at an output (QR$_8$) located at a downstream end an end-of-sequence acceptance signal (ACN) which is applied to the input (D) of a first control flip-flop (DC$_1$) which is synchronized (CK) by said clock signal (SCL) and whose output (Q) synchronizes (CK) a second control flip-flop (PNT), referred to as a pointer, whose inverted output (P) is retrocoupled to its input (D) in that the presence of a logic level "1" at the output (Q) of the first flip-flop (DC1) and at the output (P) of the pointer (PNT) enables initialisation of the register (REG), which corresponds to a return to the same initial state, that it comprises a logic comparator (10, 11, 12) identifying, in a given part of an address sequence, series logic information supplied by the bus if at least said address sequence corresponds to said indicated address, and producing an identification logic signal (DVA), in that it comprises a circuit (66, 67) for storing said identification signal (DVA), and in that it comprises an AND-gate (33) enabling the loading into the memory (M) of the data of the register (R) when the output (Q) of the first control flip-flop (DC$_1$) and the pointer (PNT) are in the logic state "1" when a said stored identification signal (ADC) is present as well as a so-called end-of sequence acceptance signal (ACN) which, therefore, corresponds to the end of a data sequence following said address sequence.

2. An interface circuit as claimed in Claim 1, characterized in that the configuration is such as to initialise the register (REG) by setting a first flip-flop (R$_n$) to the state "1" and resetting its other flip-flops (R$_1$...R$_8$) to zero when the output of the first control flip-flop (DC$_1$) is in the state "1" and the output (Q) of the pointer (PNT) is in the state zero.

3. An interface circuit as claimed in either of the Claims 1 or 2, characterized in that it comprises a series of logic gates (101, 109) inhibiting the transmission of the logic signals available at the output of the first decoder (CDEC) towards the channels to be switched in the presence of a logic "off" signal (OFF) for the interface circuit.

4. An interface circuit as claimed in Claim 3, characterized in that it comprises an authorisation gate (90) receiving at one input the "off" signal (OFF) and at the other input an output (P) from a first flip-flop ($M_0$) of the memory (M) loaded during said loading by the first flip-flop ($R_0$) of the register (R) so as to enable or not, the "off" signal (OFF).

5. An interface circuit as claimed in any one of the preceding Claims, characterized in that it comprises a pulse generator (PG) which, when voltage is applied to the circuit, generates a pulse (PON) causing the initialisation of the memory (M) and of said register (REG).

6. An interface circuit as claimed in any one of the preceding Claims, characterized in that it comprises a third (STR) and a fourth (STP) control flip-flop which, when the interface circuit is in its first state, receive at their input (D) the clock signal (SCL) and are synchronized (CK) one by the information signal (SDA) and the other by the inverse ($\overline{SDA}$) thereof, so that the output (Q) of the third flip-flop (STR) is set to the state "1" by a first type of coincidence between the clock (SCL) and information (SDA) signals corresponding to the start of a said cycle, and the fourth flip-flop (STP) is set to the state "1" by a second type of coincidence between the clock (SCL) and information (SDA) signals corresponding to the end of a cycle, the third flip-flop (STR) being reset to zero by the inverse ($\overline{SCL}$) of the clock signal (SCL) and the fourth flip-flop (STP) by the output (Q) from the third flip-flop (STR), the output (Q) from the fourth flip-flop (STP) being arranged so as to set, when in the logic "1", the first flip-flop ($R_0$) of the register (R) to the state "1" and to reset its other flip-flops ($R_1...R_8$) to zero.

7. An interface circuit as claimed in Claim 6, characterized in that the fourth flip-flop (STP) has its output set to the logic state "1" when the stored identification signal (ADC) is in the logic state "0" and when the first flip-flop ($DC_1$) has its output in the logic state "1".

8. An interface circuit as claimed in either of the Claims 6 or 7, characterized in that the register (REG) is initializated when the fourth flip-flop (STP) has its output in the state "1".

9. An interface circuit as claimed in Claim 8, characterized in that the configuration is such as to produce an initialisation of the register (REG) when the third flip-flop (STR) has its output in the state "1".

10. An interface circuit as claimed in Claim 5, in combination with any one of the Claims 6 to 9, characterized in that the fourth flip-flop (STP) also has its output (Q) set to the logic state "1" by said pulse (PON), its output being, additionally, self-maintained when it is in the state "1".

11. An interface circuit as claimed in any one of the Claims 5 to 10, characterized in that the fourth flip-flop (STP) also has its output set to the logic state "1" when the output from the first ($DC_1$) and the second (PNT) flip-flop and the clock signal (SCL) are all at the logic level "1".

12. An interface circuit as claimed in any one of the preceding Claims, characterized in that it comprises an acceptance flip-flop ($R_9$) synchronized by the clock signal (SCL) and receiving at its input the logic product of the acceptance signal (ACN) and the stored identification signal (ADC), and producing at its output directed towards the bus an authorisation signal (ACK).

13. An interface circuit as claimed in the Claims 4 and 11 taken together, characterized in that the configuration is such that said pulse also produces the resetting to zero of the acceptance flip-flop ($R_9$).

14. An interface circuit as claimed in the Claims 4 and 5 taken together, characterized in that said pulse also produces the resetting to zero of the first control flip-flop ($DC_1$) and the setting to the state "1" of the fourth control flip-flop (STP).

15. An interface circuit as claimed in any one of the preceding Claims, characterized in that the circuit for storing the identification signal (DVA) comprises two inverting AND-gates (66, 67), the output of one of which is retrocoupled to one of the inputs of the other and vice versa, the other input of the first of the two inverting AND-gates (66) receiving the inverse ($\overline{DVA}$) of the identification signal (DVA), be it only if the pointer (PNT) has its output in the logic state "0" and if the clock signal is in the logic state "1", the other input of the second one of the two inverting AND-gates (67) receiving the logic product of the inverses (P) of the outputs (Q) of the third (STR) and the fourth (STP) flip-flop, so as to permit maintenance, during each cycle, of the storage (ADC) of the identification signal (DVA).

FIG.1

FIG.2

FIG.3

A

D

| STA | $A_6$ | $A_5$ | $A_4$ | $A_3$ | $A_2$ | $A_1$ | $A_0$ | W | $A_C$ | $D_7$ | $D_6$ | $D_5$ | $D_4$ | $D_3$ | $D_2$ | $D_1$ | $D_0$ | $A_C$ | STO |

*FIG.4a*

LDA

RST1

ACN

DVA

ADC

STPQ

STRQ

PNTQ

DC1Q

SDA   1   0   0   1   1   1   0   0   0   1   0   1   0   1   0   1

SCL   0   1   2   3   4   5   6   7   8   9   1   2   3   4   5   6   7   8   9   10

*FIG.4b*

EP 0 168 077 B1